# EUROPÄISCHE PATENTANMELDUNG

(11) **EP 4 752 513 A1**
(43) Veröffentlichungstag der Anmeldung: **03.06.2026**
(21) Anmeldenummer: 25213831.8
(22) Anmeldetag: 06.11.2025
(51) Int. Cl.: G01L 9/00, G01L 23/10

(54) **PIEZOELEKTRISCHER HOCHDRUCKSENSOR**

(30) Priorität: 28.11.2024 EP 24216171
(71) Anmelder: Kistler Holding AG, 8408 Winterthur (CH)
(72) Erfinder: Hoefler, Julian, 78247 Hilzingen-Riedheim (DE); Roth, Lukas, 5405 Baden (CH); Brechbühl, Stefan, 8570 Weinfelden (CH)

(57) **Zusammenfassung**

Die Erfindung betrifft einen piezoelektrischen Hochdrucksensor zur Messung eines Druckes von bis zu 10 kbar; mit einem Gehäuse, einer Membran und einer Messeinheit; welches Gehäuse hohlzylinderförmig ist und einen Mantel und einen Hohlraum aufweist, in welchem Mantel mindestens ein Montagemittel eingeformt ist, welcher piezoelektrische Hochdrucksensor über das Montagemittel an einem Messort montierbar ist; welche Messeinheit im Hohlraum angeordnet ist und mindestens ein Messelement aus piezoelektrischem Material aufweist; welche Membran scheibenförmig ist, mit einem Zentralbereich und einem Randbereich, welche Membran eingerichtet ist, den zu messenden Druck über den Zentralbereich aufzunehmen und entlang einer Vertikalachse in die Messeinheit zu übertragen, und welche Membran über den Randbereich mit dem Mantel stoffschlüssig verbunden ist; wobei das Messelement stabförmig ist und gemäss dem piezoelektrischen Transversaleffekt arbeitet; wobei das Messelement eine Länge entlang der Vertikalachse und eine Querschnittsfläche normal zur Vertikalachse aufweist; wobei ein Verhältnis von Länge zu Querschnittsfläche in einem Bereich von grösser/gleich 1.0 mm⁻¹ bis kleiner/gleich 1.5 mm⁻¹ liegt; und wobei der Mantel einen Durchmesser von kleiner/gleich 10 mm aufweist.

## Beschreibung

### Technisches Gebiet

Die Erfindung betrifft einen piezoelektrischen Hochdrucksensor nach dem Oberbegriff des unabhängigen Anspruches.

### Stand der Technik

Piezoelektrische Sensoren sind bekannt und eignen sich zur Messung von ganz unterschiedlichen physikalischen Grössen wie Druck, Kraft, Dehnung und Beschleunigung. Die piezoelektrischen Sensoren arbeiten alle nach dem gleichen Prinzip. Unter der Wirkung der zu messenden physikalischen Grösse erzeugt ein piezoelektrisches Material elektrische Ladungen Q. Die elektrischen Ladungen werden auf Oberflächen des piezoelektrischen Materials von Elektroden abgegriffen. Die Menge der elektrischen Ladungen ist proportional zum Betrag der physikalischen Grössen. Diese Proportionalität wird auch Linearität genannt. Das piezoelektrische Material und die Elektroden bilden eine Messeinheit.

Piezoelektrische Drucksensoren weisen in der Regel ein Gehäuse und eine Membran aus mechanisch widerstandsfähigem Material wie Edelstahl auf. Das Gehäuse ist hohlzylinderförmig mit einem Mantel und einem Hohlraum. Die Membran ist scheibenförmig mit einem Zentralbereich und einem Randbereich. Die Messeinheit ist im Hohlraum angeordnet. Über den Zentralbereich nimmt die Membran den zu messenden Druck auf und überträgt ihn als Beaufschlagungskraft auf die Messeinheit. Über den Randbereich ist die Membran mit dem Mantel stoffschlüssig verbunden. Dadurch ist der Hohlraum hermetisch dicht verschlossen und die Messeinheit vor schädlichen Umwelteinflüssen geschützt. Um den Druck mit möglichst geringem Widerstand zu übertragen, ist die Membran nachgiebig gestaltet. Diese Nachgiebigkeit wird durch eine geringe Dicke der Membran von kleiner/gleich 0.5 mm erreicht. Damit erreicht der piezoelektrische Drucksensor eine hohe Empfindlichkeit, das ist die Menge der elektrischen Ladungen für den wirkenden Druck. Über den Mantel lässt sich der piezoelektrische Drucksensor an einem Messort montieren, beispielsweise über ein genormtes Aussengewinde.

Zur Messung eines hohen Druckes von mehr 1 kbar sind spezielle piezoelektrische Hochdrucksensoren entwickelt worden. Ein solch hoher Druck von mehr als 1 kbar tritt bei hochdynamischen Druckverläufen wie Explosionen auf. Bei solchen hochdynamischen Druckverläufen ist für eine genaue Messung eine hohe Messfrequenz nötig. Und da die Messfrequenz von der Eigenfrequenz begrenzt ist, weisen piezoelektrische Hochdrucksensoren eine hohe Eigenfrequenz auf. Gemäss Entscheidung XXXII-45 der internationalen Normungs- und Prüfungskommission für Handfeuerwaffen und Munition (C.I.P.) vom Oktober 2014 müssen piezoelektrische Hochdrucksensoren eine Eigenfrequenz von grösser/gleich 150 kHz aufweisen. In der Regel liegt die maximale Messfrequenz bei 1/3 der Eigenfrequenz.

Derartige piezoelektrische Hochdrucksensoren werden von der Anmelderin unter der Bezeichnung Typ 6213B und Typ 6217A vertrieben. Die technischen Informationen über diese Sensoren sind aus dem Datenblatt 6217A_003-622e_02.23 erhältlich. Der Typ 6217A ist für einen Druck bis 2 kbar ausgelegt und weist eine Eigenfrequenz von grösser 180 kHz auf. Der Typ 6213B kann einen Druck von bis zu 10 kbar messen und hat eine Eigenfrequenz von grösser 150 kHz.

Bei vielen Materialien wird bei einem hohen Druck von mehr als 1 kbar die Elastizitätsgrenze überschritten. Dies gilt es zu vermeiden, denn beim Überschreiten der Elastizitätsgrenze ist die mechanische Stabilität der Materialien nicht mehr gewahrt und es treten irreversible Schäden wie plastische Verformung oder Bruch auf. Plastische Verformung oder Bruch haben eine Abweichung von der Linearität und schliesslich den Ausfall des piezoelektrischen Hochdrucksensors zu Folge. Daher eignen sich für piezoelektrische Hochdrucksensoren nur relativ wenige Materialien. Bewährt haben sich für den Mantel und die Membran hochlegierter Edelstahl und für das piezoelektrische Material der Messeinheit Einkristall aus SiO₂, GaPO₄, usw. Hochlegierter Edelstahl ist duktil und die Bestimmung der Elastizitätsgrenze von Mantel und Membran erfolgt im Zugversuch als 0.2 %-Dehngrenze. Einkristall aus SiO₂, GaPO₄ hingegen ist spröde und die Bestimmung der Elastizitätsgrenze der Messeinheit erfolgt daher im Druckversuch als 0.2 %-Stauchgrenze.

Um zu vermeiden, dass die 0.2 %-Stauchgrenze der Messeinheit überschritten wird, überträgt die Membran nur einen kleineren Teil des Druckes als Beaufschlagungskraft in die Messeinheit. Ein grösserer Teil des Druckes wird als Kraft vom Mantel aufgenommen. Diese Aufteilung des Druckes hat einen Einfluss auf die Empfindlichkeit des piezoelektrischen Hochdrucksensors. Beim Typ 6217A, der für einen Druck von 2 kbar ausgelegt ist, beträgt die Empfindlichkeit 13 pC/bar. Beim Typ 6213B hingegen, der für einen fünfmal höheren Druck bis 10 kbar ausgelegt ist, wird ein deutlich kleinerer Teil des Druckes als Beaufschlagungskraft in das piezoelektrische Material übertragen und resultiert in einer entsprechend geringen Empfindlichkeit von 1.2 pC/bar. Diese geringe Empfindlichkeit erfüllt die minimalen Anforderungen an die Empfindlichkeit von 1.0 pC/bar der Entscheidung XXXII-45 der C.I.P. vom Oktober 2014.

Der Mantel des piezoelektrischen Hochdrucksensors nimmt den grösseren Teil des Druckes als Kraft auf und ist dementsprechend massiv gestaltet. Dies führt zu einem relativ grossen Durchmesser des Mantels. Der Typ 6213B und der Typ 6217A weisen beide zur Montage am Messort ein M12-Aussengewinde auf.

Nun ist am Messort der Platzbedarf oft sehr eingeschränkt. Es ist daher Wunsch der Anwender von piezoelektrischen Hochdrucksensoren, den Durchmesser des Mantels zu verkleinern.

Diesbezüglich vertreibt die Anmelderin einen piezoelektrische Hochdrucksensor mit der Bezeichnung Typ 6215. Die technischen Informationen über den Typ 6215 sind ebenfalls aus dem Datenblatt 6217A _003-622e_02.23 erhältlich. Der Typ 6215 weist für die Montage am Messort ein M10-Aussengewinde auf, er ist für einen Druck bis 6 kbar ausgelegt, er weist eine Eigenfrequenz von grösser 240 kHz auf und seine Empfindlichkeit beträgt 1.4 pC/bar.

Aufgabe der vorliegenden Erfindung ist es, einen gegenüber den Typen 6213B, 6215 und 6217A verbesserten piezoelektrischen Hochdrucksensor bereitzustellen. Insbesondere soll der verbesserte piezoelektrische Hochdrucksensor einen Mantel mit einem vergleichsweise kleinen Durchmesser von kleiner/gleich 10 mm Durchmesser aufweisen und trotzdem einen vergleichsweise hohen Druck von bis zu 10 kbar messen können. Auch soll der verbesserte piezoelektrische Hochdrucksensor die Anforderungen an die Eigenfrequenz von grösser/gleich 150 kHz und an die Empfindlichkeit von 1.0 pC/bar der Entscheidung XXXII-45 der C.I.P. vom Oktober 2014 erfüllen.

### Darstellung der Erfindung

Diese Aufgabe wird durch die Merkmale des unabhängigen Anspruches gelöst.

Die Erfindung betrifft einen piezoelektrischen Hochdrucksensor zur Messung eines Druckes von bis zu 10 kbar; mit einem Gehäuse, einer Membran und einer Messeinheit, welches Gehäuse hohlzylinderförmig ist und einen Mantel und einen Hohlraum aufweist, in welchem Mantel mindestens ein Montagemittel eingeformt ist, welcher piezoelektrische Hochdrucksensor über das Montagemittel an einem Messort montierbar ist; welche Messeinheit im Hohlraum angeordnet ist und mindestens ein Messelement aus piezoelektrischem Material aufweist; welche Membran scheibenförmig ist, mit einem Zentralbereich und einem Randbereich, welche Membran eingerichtet ist, den zu messenden Druck über den Zentralbereich aufzunehmen und entlang einer Vertikalachse in die Messeinheit zu übertragen, und welche Membran über den Randbereich mit dem Mantel stoffschlüssig verbunden ist; wobei das Messelement stabförmig ist und gemäss dem piezoelektrischen Transversaleffekt arbeitet; wobei das Messelement eine Länge entlang der Vertikalachse und eine Querschnittsfläche normal zur Vertikalachse aufweist; wobei ein Verhältnis von Länge zu Querschnittsfläche in einem Bereich von grösser/gleich 1.0 mm⁻¹ bis kleiner/gleich 1.5 mm⁻¹ liegt; und wobei der Mantel einen Durchmesser von kleiner/gleich 10 mm aufweist.

Die Erhöhung des Messbereiches gegenüber dem Typ 6215 auf einen Druck von bis zu 10 kbar bei Beibehaltung des Durchmessers des Mantels von kleiner/gleich 10 mm hat Auswirkungen auf die Montage des piezoelektrischen Hochdrucksensors am Messort. Denn gemäss dem Standard Allied Engineering Publication 97 (AEP-97) der North Atlantic Treaty Organisation (NATO) vom Oktober 2020 soll eine M10-Schraubverbindung eines piezoelektrischen Hochdrucksensors ein Anzugsdrehmoment von nicht mehr als 20 Nm aufweisen. Diesem Anzugdrehmoment entspricht eine Niederhaltekraft von kleiner/gleich 20 kN, mit welcher der piezoelektrische Hochdrucksensor in der Montagebohrung gehalten wird. Mit diesem Anzugsdrehmoment wird gewährleistet, dass eine Kombination von Niederhaltekraft und Beaufschlagungskraft in den Materialien des piezoelektrischen Hochdrucksensors nicht zu schädlichen Spannungsspitzen mit plastischer Verformung oder Bruch führt.

Ein Druck von 10 kbar mit einer Niederhaltekraft von kleiner/gleich 20 kN ergibt eine Beaufschlagungsfläche von kleiner/gleich 20 mm², was 1/3 der Oberfläche der scheibenförmigen Membran ist. Diese vergleichsweise geringe Beaufschlagungsfläche überträgt weniger als 1/3 des Druckes in das piezoelektrische Material und setzt damit die Empfindlichkeit des piezoelektrischen Hochdrucksensors herab. Um dennoch die gemäss der Entscheidung XXXII-45 der C.I.P. vom Oktober 2014 geforderte Empfindlichkeit von 1.0 pC/bar zu erfüllen, muss das stabförmige Messelement möglichst lang sein. Denn die Menge der elektrischen Ladung Q, welche das gemäss dem piezoelektrischen Transversaleffekt arbeitende Messelement unter der Wirkung des Druckes auf seinen Seitenflächen erzeugt, steigt linear mit seiner Länge. Die Empfindlichkeit ist das Verhältnis der Menge der elektrischen Ladungen zum wirkenden Druck.

Die Erhöhung des Messbereiches gegenüber dem Typ 6215 auf einen Druck von bis zu 10 kbar hat aber auch Auswirkung auf die Membran. Denn das piezoelektrische Material der Messeinheit ist deutlich elastischer als das Material des Mantels. Gemäss dem Hookeschen Gesetz ist die Elastizität das Produkt aus Elastizitätsmodul und Länge. Der Elastizitätsmodul des piezoelektrischen Materials ist mehr als halb so klein wie derjenige des Materials vom Mantel. Diese Elastizität führt in der Membran, welche den zu messenden Druck über den Zentralbereich in die Messeinheit überträgt, während sie über den Randbereich mit dem Mantel stoffschlüssig verbunden und somit fest gehalten ist, im Zentralbereich zu einer zusätzlichen Biegung entlang der Vertikalachse. Die zusätzliche Biegung äussert sich in Zug- und Druckspannungen in der Dicke des Zentralbereiches. Diese Zug- und Druckspannungen sind in der Randfaser der Dicke des Zentralbereiches am höchsten. Und da die Dicke des Zentralbereiches mit kleiner/gleich 0.5 mm gering ist, welche Dicke rund eine Grössenordnung über der Grösse der Korngrenzen des Materials der Membran liegt, können die Zug- und Druckspannungen diese Korngrenzen in der Randfaser verschieben und einen Riss der Membran verursachen, was unweigerlich zum Ausfall des piezoelektrischen Hochdrucksensors führt.

Um die Zug- und Druckspannungen im Zentralbereich der Membran klein zu halten, muss das Messelement möglichst kurz sein. Die Beziehung ist proportional, je kürzer die Länge des Messelementes ist, desto kleiner sind die Zug- und Druckspannungen im Zentralbereich der Membran.

Um einen Ausweg aus dem Dilemma der geforderten hohen Empfindlichkeit des piezoelektrischen Hochdrucksensors und der klein zu haltenden Zug- und Druckspannungen im Zentralbereich der Membran zu finden, wird erfindungsgemäss die Querschnittsfläche des Messelementes vergrössert, so dass ein Verhältnis von Länge zu Querschnittsfläche des Messelementes in einem Bereich von grösser/gleich 1.0 mm⁻¹ bis kleiner/gleich 1.5 mm⁻¹ liegt.

Denn die Vergrösserung der Querschnittsfläche des Messelementes erniedrigt die Elastizität des piezoelektrischen Materials quadratisch, während sie die Menge der unter der Wirkung des Druckes auf den Seitenflächen des Messelementes erzeugten elektrischen Ladung nur linear verkleinert.

Im Vergleich zum Typ 6215 weit der erfinderische piezoelektrische Hochdrucksensor den gleichen Durchmesser vom Mantel von kleiner/gleich 10 mm auf. Aufgrund des gleichen Durchmessers unterscheiden sich der Typ 6215 und der erfindungsgemässe piezoelektrische Hochdrucksensor im Gewicht nur geringfügig. Und da die Eigenfrequenz umgekehrt proportional zum Gewicht ist, resultiert daraus im Vergleich zum Typ 6215 eine ähnlich hohe Eigenfrequenz des erfindungsgemässen piezoelektrischen Hochdrucksensors von grösser/gleich 150 kHz.

Vorteilhafte Weiterbildungen der Erfindung sind in den abhängigen Ansprüchen geschützt.

### Kurze Beschreibung der Zeichnungen

Im Folgenden wird die Erfindung in einer beispielhaften Ausführungsform unter Beizug von Figuren näher erläutert. Es zeigen
Fig. 1 ein Längsschnitt durch einen Teil eines piezoelektrischen Hochdrucksensors 10; und
Fig. 2 ein Querschnitt eines Teils des piezoelektrischen Hochdrucksensors 10 gemäss Fig. 1 entlang eines Schnittverlaufes A - A.

Gleiche Bezugszeichen bezeichnen in den Figuren gleiche Gegenstände.

### Wege zur Ausführung der Erfindung

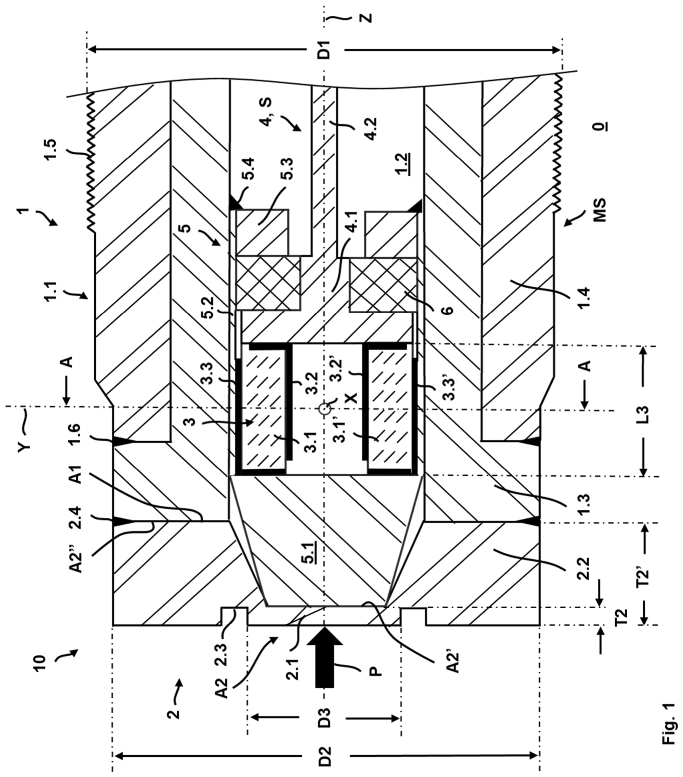

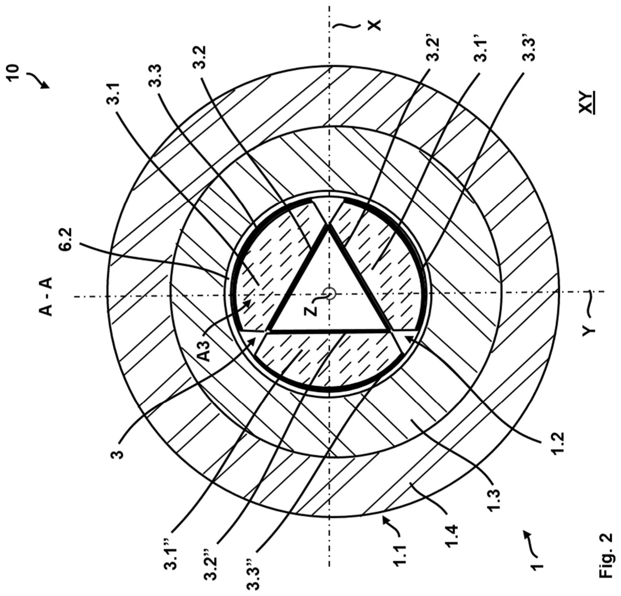

Die Fig. 1 zeigt einen Längsschnitt durch einen Teil des piezoelektrischen Hochdrucksensors 10 entlang einer Vertikalachse Z. Die Fig. 2 zeigt den piezoelektrischen Hochdrucksensor 10 entlang eines Schnittverlaufes A - A in einem Querschnitt einer von einer Horizontalachse X und einer Längsachse Y aufgespannten Horizontalebene XY. Die drei Achsen X, Y, Z stehen senkrecht aufeinander. Die Horizontalebene XY ist normal zur Vertikalachse Z. Da der piezoelektrische Hochdrucksensors 10 bezüglich der Vertikalachse Z weitgehend rotationssymmetrisch ist, wird nachfolgend eine Richtung entlang der Horizontalachse X oder der Längsachse Y auch als "radiale Richtung" bezeichnet. Ein entlang der Horizontalachse X oder der Längsachse Y von der Vertikalachse Z entfernter Gegenstand wird nachfolgend auch als "bezüglich der Vertikalachse Z radial beanstandet" bezeichnet. Und ein erster Gegenstand, der von einem zweiten Gegenstand entlang der Horizontalachse X oder der Längsachse Y umschlossen ist, wird nachfolgend auch als "bezüglich der Vertikalachse Z radial umschlossen" bezeichnet.

Der piezoelektrische Hochdrucksensor 10 weist ein Gehäuse 1, eine Membran 2 und eine Messeinheit 3 auf.

### DAS GEHÄUSE 1

Das Gehäuse 1 hat einerseits die Funktion, die Messeinheit 3 vor schädlichen Umwelteinflüssen wie Feuchtigkeit, Staub, Berührung, usw. zu schützen. Das Gehäuse 1 hat andererseits die Funktion, eine Montage des piezoelektrischen Hochdrucksensor 10 an einem Messort 0 zu bewerkstelligen.

Das Gehäuse 1 besteht aus einem mechanisch beständigem Material. Vorzugsweise ist das Material des Gehäuses 1 ein hochlegierter Edelstahl mit einem Elastizitätsmodul von grösser 200 kN/mm² und einer 0.2 %-Dehngrenze von grösser/gleich 1200 MPa, vorzugsweise grösser/gleich 1600 MPa. Beispielsweise hat der hochlegierte Edelstahl die Werkstoffnummer 1.6358.

Das Gehäuse 1 weist einen Mantel 1.1 und einen Hohlraum 1.2 auf. Der Mantel 1.1 ist hohlzylinderförmig erstreckt sich im Längsschnitt gemäss Fig. 1 entlang der Vertikalachse Z. Der Mantel 1.1 umschliesst den Hohlraum 1.2 radial beanstandet zur Vertikalachse Z. In radialer Richtung weist das Gehäuse 1 einen Aussendurchmesser D1 von kleiner/gleich 10 mm auf.

Vorzugsweise ist der Mantel 1.1 mehrteilig gefertigt, mit einem ersten Mantelteil 1.3 und einem zweiten Mantelteil 1.4. Der mehrteilige Mantel 1.1 hat die Funktion, zu verhindern, dass eine Niederhaltekraft, welche von der Montage des piezoelektrischen Hochdrucksensors 10 am Messort 0 stammt, nicht in die Messeinheit 3 gelangt. Eine solche Niederhaltekraft ist in der Messeinheit 3 unerwünscht, denn sie verfälscht die Messung des Druckes P.

Im Schnittverlauf A - A gemäss Fig. 2 ist das erste Mantelteil 1.3 vom zweiten Mantelteil 1.4 bezüglich der Vertikalachse Z radial umschlossen. Der Aussendurchmesser D1 des Gehäuses 1 ist auch der Aussendurchmesser D1 des zweiten Mantelteils 1.4 Das erste Mantelteil 1.3 und das zweite Mantelteil 1.4 liegen entlang der Vertikalachse Z lediglich aneinander an. Das erste Mantelteil 1.3 und das zweite Mantelteil 1.4 sind über eine stoffschlüssige Mantelverbindung 1.6 miteinander verbunden. Vorzugsweise ist die stoffschlüssige Mantelverbindung 1.6 eine ringförmige Schweissverbindung, welche sich über 360° über den gesamten Umfang des Mantels 1.1 erstreckt. Die stoffschlüssige Mantelverbindung 1.6 ist hermetisch dicht.

Am zweiten Mantelteil 1.4 ist mindestens ein Montagemittel 1.5 eingeformt. Vorzugsweise ist das Montagemittel 1.5 ein M10-Aussengewinde. Über das Montagemittel 1.5 ist der piezoelektrische Hochdrucksensor 10 in einer am Messort 0 angeordneten passend gefertigten Montagebohrung montierbar. Die Montagebohrung ist figürlich nicht dargestellt. Vorzugsweise weist die Montagebohrung ein M10-Innengewinde auf. Das M10-Aussengewinde und das M10-Innengewinde bilden eine M10-Schraubverbindung.

Gemäss dem Standard AEP-97 vom Oktober 2020 soll die M10-Schraubverbindung ein Anzugsdrehmoment von nicht mehr als 20 Nm aufweisen. Im montierten Zustand hält das Anzugdrehmoment von 20 Nm den piezoelektrischen Hochdrucksensor 10 mit einer Niederhaltekraft von kleiner/gleich 20 kN in der Montagebohrung. Eine Beaufschlagungskraft F des Druckes P darf die Niederhaltekraft nicht überschreiten, andernfalls wird der piezoelektrische Hochdrucksensor 1 aus der Montagebohrung getrieben. Die maximal zulässige Beaufschlagungskraft beträgt somit kleiner/gleich 20 kN.

Der Mantel 1.1 weist normal zur Vertikalachse Z eine der Membran 2 zugewandte Endfläche A1 auf. Vorzugsweise ist die Endfläche A1 kreisringförmig.

### DIE MEMBRAN 2

Die Membran 2 hat die Funktion, den zu messenden Druck P aufzunehmen und als Kraft auf die Messeinheit 3 zu übertragen. Der zu messende Druck P ist im Längsschnitt gemäss Fig. 1 schematisch als Pfeil dargestellt.

Die Membran 2 besteht aus einem mechanisch beständigem Material. Vorzugsweise ist das Material der Membran 2 ein hochlegierter Edelstahl mit einem Elastizitätsmodul von grösser 200 kN/mm² und einer 0.2 %-Dehngrenze von grösser/gleich 1200 MPa, vorzugsweise grösser/gleich 1600 MPa. Der hochlegierte Edelstahl ist beispielsweise ein Material mit der Werkstoffnummer 1.6358 oder der Bezeichnung Armox Advance.

Die Membran 2 ist scheibenförmig. In radialer Richtung weist die Membran 2 einen Aussendurchmesser D2 von kleiner/gleich 8.5 mm auf.

Die Membran 2 weist einen Zentralbereich 2.1 und einen Randbereich 2.2 auf. Im Längsschnitt gemäss Fig. 1 ist der Zentralbereich 2.1 auf der Vertikalachse Z angeordnet und bezüglich der Vertikalachse Z vom Randbereich 2.2 radial umschlossen. Der Zentralbereich 2.1 und der Randbereich 2.2 sind einstückig gefertigt.

Die Membran 2 weist entlang der Vertikalachse Z eine Dicke T2, T2' auf. Die Dicke T2, T2' der Membran 2 ist deutlich kleiner als der Aussendurchmesser D2. Im Zentralbereich 2.1 weist die Membran eine Dicke T2 auf und im Randbereich 2.2 weist die Membran 2 eine Dicke T2' auf. Die Dicke T2 des Zentralbereiches 2.1 ist geringer als Dicke T2' des Randbereiches 2.2. Vorzugsweisse ist die Dicke T2 des Zentralbereiches 2.1 kleiner/gleich 0.5 mm. Vorzugsweisse ist die Dicke T2' des Randbereiches 2.2 kleiner/gleich 3 mm.

Durch die geringe Dicke T2 des Zentralbereiches 2.1 ist die Membran 2 nachgiebig gestaltet. Dadurch überträgt die Membran 2 den zu messenden Druck P mit möglichst geringem Widerstand auf die Messeinheit 3.

Im Zentralbereich 2.1 weist die Membran 2 eine Beaufschlagungsfläche A2 auf. Die Beaufschlagungsfläche A2 erstreckt sich senkrecht zur Vertikalachse Z. Die Beaufschlagungsfläche A2 ist auf einer vom Hohlraum 1.2 abgewandten Seite der Membran 2 angeordnet. Die Beaufschlagungsfläche A2 ist bezüglich der Vertikalachse Z radial von einer Dichtfläche 2.3 umgeben. Die Dichtfläche 2.3 ist eingerichtet, ein figürlich nicht dargestelltes Dichtmittel aufzunehmen. Der zu messende Druck P wirkt direkt auf die Beaufschlagungsfläche A2. Die Grösse der Beaufschlagungsfläche A2 ergibt sich aus dem Quotienten vom maximal zulässiger Beaufschlagungskraft von kleiner/gleich 20 kN und dem Druck P. Für einen Druck P von bis zu 10 kbar ist die Grösse der Beaufschlagungsfläche A2 kleiner/gleich 20 mm². Vorzugsweise ist die Beaufschlagungsfläche A2 kreisförmig mit einem Durchmesser D3 von kleiner/gleich 5.0 mm.

Im Zentralbereich 2.1 weist die Membran 2 eine Zentralfläche A2' auf. Die Zentralfläche A2' erstreckt sich senkrecht zur Vertikalachse Z. Die Zentralfläche A2' ist auf einer der Messeinheit 3 zugewandten Seite der Membran 2 angeordnet. Vorzugsweise ist die Zentralfläche A2' kreisförmig.

Über den Randbereich 2.2 ist die Membran 2 mit dem ersten Mantelteil 1.3 verbunden. Der Randbereich 2.2 weist im Vergleich zum Zentralbereich 2.1 entlang der Vertikalachse Z eine grössere Dicke auf. Der Randbereich 2.2 weist eine Randfläche A2'' auf. Die Randfläche A2'' erstreckt sich senkrecht zur Vertikalachse Z. Die Randfläche A2'' ist auf einer dem Mantel 1.1 zugewandten Seite der Membran 2 angeordnet. Vorzugsweise ist die Randfläche A2'' kreisringförmig. Die Randfläche A2'' ist der Endfläche A1 des ersten Mantelteils 1.3 zugewandt. Die Randfläche A2'' ist im direkten flächigen Kontakt mit der Endfläche A1. Vorzugsweise ist die Randfläche A2'' gleich gross gestaltet wie die Endfläche A1.

Über eine stoffschlüssige Membranverbindung 2.4 ist die Membran 2 am Randbereich 2.2 mit dem ersten Mantelteil 1.3 der Membran 1.1 verbunden. Vorzugsweise ist die stoffschlüssige Membranverbindung 2.4 eine ringförmige Schweissverbindung, welche sich über 360° Die stoffschlüssige Membranverbindung 2.4 ist hermetisch dicht.

### DIE MESSEINHEIT 3

Die Messeinheit 3 hat die Funktion, für den zu messenden Druck P ein Messsignal S bereitzustellen.

Die Messeinheit 3 weist mindestens ein Messelement 3.1, 3.1'. 3.1'' auf. Das Messelement 3.1, 3.1'. 3.1'' hat die Funktion, unter der Wirkung des zu messenden Druckes P elektrische Ladung zu erzeugen.

Die Messeinheit 3 besteht aus piezoelektrischem Material. Vorzugsweise ist das piezoelektrische Material ein Einkristall aus SiO₂, GaPO₄, usw. Nachfolgend wird die Erfindung im Detail am Beispiel von Einkristall aus SiO₂ oder GaPO₄ als piezoelektrisches Material erläutert. Für die Erfindung ist dies aber in keiner Weise bindend. Der Fachmann kann zur Realisierung der Erfindung auch anderes piezoelektrisches Material aus Einkristall wie CalciumGalloGermanat (Ca₃Ga₂Ge₄O₁₄ oder CGG), Langasit (La₃Ga₅SiO₁₄ oder LGS), Turmalin, usw. verwenden.

Das Messelement 3.1, 3.1', 3.1" weist eine mit grosser Ebenheit einfach herstellbare geometrische Form auf. Das Messelement 3.1, 3.1', 3.1'' ist stabförmig, mit zwei Endflächen und mehrere Seitenflächen. Die Endflächen sind normal zur Vertikalachse Z angeordnet. Die Seitenflächen sind entlang der Vertikalachse Z angeordnet. Die Seitenflächen sind deutlich grösser als die Endflächen. Das Messelement 3.1, 3.1', 3.1'' ist mit einer axial äusseren Endfläche der Membran 2 zugewandt und mit einer axial inneren Endfläche von der Membran 2 abgewandt. Über die axial äussere Endfläche wird der zu messende Druck P in das Messelement 3.1, 3.1', 3.1'' übertragen. Das Messelement 3.1, 3.1', 3.1'' weist eine radial innere Seitenfläche und eine radial äussere Seitenfläche auf. Die radial innere Seitenfläche ist der Vertikalachse Z zugewandt, die radial äussere Seitenfläche ist von der Vertikalachse Z abgewandt.

Das Messelement 3.1, 3.1', 3.1'' weist eine Länge L3 entlang der Vertikalachse Z auf. Vorzugsweise ist die Länge L3 des Messelementes 3.1, 3.1', 3.1'' kleiner/gleich 3.0 mm, vorzugsweise kleiner/gleich 2.4 mm.

Das Messelement 3.1, 3.1', 3.1'' weist eine Querschnittsfläche A3 normal zur Vertikalachse Z auf. Vorzugsweise liegt die Querschnittsfläche A3 im Bereich grösser/gleich 1.5 mm² und kleiner/gleich 2.5 mm². Bei drei Messelementen 3.1, 3.1', 3.1'' resultiert eine gesamte Querschnittsfläche A3 im Bereich von grösser/gleich 4.5 mm² und kleiner/gleich 7.5 mm².

Somit liegt das Verhältnis von Länge L3 zu Querschnittsfläche A3 des Messelementes 3.1, 3.1', 3.1'' in einem Bereich von grösser/gleich 1.0 mm⁻¹ und kleiner/gleich 1.5 mm⁻¹.

Das Messelement 3.1, 3.1', 3.1'' ist so aus dem Einkristall geschnitten, dass es für den piezoelektrischen Transversaleffekt eine hohe Empfindlichkeit aufweist und unter der Wirkung des Druckes P die elektrische Ladung auf den Seitenflächen erzeugt. Das für den piezoelektrischen Transversaleffekt aus dem Einkristall geschnittene SiO₂ weist einen piezoelektrischen Koeffizienten d₁₂ = 2.3 pC/N auf. Das für den piezoelektrischen Transversaleffekt aus dem Einkristall geschnittene GaPO₄ weist einen piezoelektrischen Koeffizienten d₁₂ = 4.5 pC/N. Die Bezeichnung d₁₂ für den piezoelektrischen Koeffizienten ist kein Bezugszeichen und somit nicht in den Figuren enthalten.

Vorzugsweise weist die Messeinheit 3 genau drei Messelement 3.1, 3.1', 3.1'' auf. Die drei Messelemente 3.1, 3.1', 3.1'' bestehen aus einem ersten Messelement 3.1, einem zweiten Messelement 3.1' und einem dritten Messelement 3.1". Die drei Messelemente 3.1, 3.1', 3.1'' sind identisch. Durch die Anzahl von drei Messelementen 3.1, 3.1', 3.1" ist die Empfindlichkeit des piezoelektrischen Hochdrucksensors 10 erhöht.

Die Empfindlichkeit des piezoelektrischen Hochdrucksensors 10 ist das Verhältnis der Menge der elektrischen Ladung zum wirkenden Druck P. Die Empfindlichkeit ist proportional zum Produkt des piezoelektrischen Koeffizienten d₁₂ des Messelementes 3.1, 3.1', 3.1'' mit dem Verhältnis von Länge L3 zu Querschnittsfläche A3 des Messelementes 3.1, 3.1', 3.1". Für SiO₂ als piezoelektrisches Material mit einem piezoelektrischen Koeffizienten d₁₂ = 2.3 pC/N oder GaPO₄ als piezoelektrisches Material mit einem piezoelektrischen Koeffizienten d₁₂ = 4.5 pC/N sowie für ein Verhältnis von Länge L3 zu Querschnittsfläche A3 des Messelementes 3.1, 3.1', 3.1'' im Bereich von grösser/gleich 1.0 mm⁻¹ und kleiner/gleich 1.5 mm⁻¹ ist die Empfindlichkeit grösser/gleich 1.0 pC/bar und erfüllt die Anforderung der Entscheidung XXXII-45 der C.I.P. vom Oktober 2014.

Einkristalle aus SiO₂ und GaPO₄ weisen Elastizitätsmoduln mit anisotropen Elastizitätskoeffizienten auf. Das für den piezoelektrischen Transversaleffekt geschnittene SiO₂ weist entlang der Vertikalachse Z einen Elastizitätskoeffizienten von 87 kN/mm² auf. Das für den piezoelektrischen Transversaleffekt geschnittene GaPO₄ weist entlang der Vertikalachse Z einen Elastizitätskoeffizienten von 67 kN/mm² auf.

Im Vergleich mit dem Elastizitätsmodul des Materials des Mantels 1.1 ist der Elastizitätskoeffizient des piezoelektrischen Materials aus SiO₂ um mehr als einen Faktor 2 kleiner oder der Elastizitätskoeffizient des piezoelektrischen Materials aus GaPO₄ ist um einen Faktor 3 kleiner. Somit wird das piezoelektrische Material der Messeinheit 3 unter der Wirkung des Druckes P gemäss dieser Faktoren stärker entlang der Vertikalachse Z gestaucht als das Material des Mantels 1.1. Und da die Membran 2 über den Zentralbereich 2.1 mit dem Messelement 3.1, 3.1', 3.1'' im indirekten flächigen Kontakt ist, während sie im Randbereich 2.2 mit dem Mantel 1.1 stoffschlüssig verbunden ist, bewirkt die Stauchung des piezoelektrischen Materials der Messeinheit 3 Zug- und Druckspannungen im Zentralbereich 2.1 der Membran 2. Je kürzer das Messelement 3.1, 3.1', 3.1'' ist, desto kleiner sind die Zug- und Druckspannungen im Zentralbereich 2.1. Für eine Länge L3 des Messelementes 3.1, 3.1'. 3.1" von kleiner/gleich 3.0 mm, vorzugsweise kleiner/gleich 2.4 mm sind die Zug- und Druckspannungen bei einem Druck P von bis zu 10 kbar auf einem für die mechanische Stabilität des Zentralbereiches 2.1 unschädlichem Niveau. In diesem Zusammenhang hat das Eigenschaftswort "unschädlich" die Bedeutung, dass die Zug- und Druckspannungen im Zentralbereich 2.1 mit grosser Wahrscheinlichkeit nicht zu einem Ausfall des piezoelektrischen Hochdrucksensors 10 führen.

Die Messeinheit 3 weist mindestens eine Signalelektrode 3.2, 3.2'. 3.2'' und mindestens eine Masseelektrode 3.3, 3.3'. 3.3'' auf. Die Signalelektrode 3.2, 3.2'. 3.2'' und die Masseelektrode 3.3, 3.3'. 3.3" haben die Funktion, die elektrische Ladung von den Seitenflächen des Messelementes 3.1, 3.1', 2.1'' abzugreifen.

Die Signalelektrode 3.2, 3.2'. 3.2" und die Masseelektrode 3.3, 3.3'. 3.3'' bestehen aus elektrisch leitfähigem Material wie Aluminium, Silber, usw. Die Signalelektrode 3.2, 3.2'. 3.2'' und die Masseelektrode 3.3, 3.3'. 3.3'' sind auf den Seitenflächen und den Endflächen des Messelementes 3.1, 3.1', 3.1'' angeordnet. Das Anordnen der Signalelektrode 3.2, 3.2'. 3.2" und der Masseelektrode 3.3, 3.3'. 3.3'' auf den Seitenflächen und den Endflächen des Messelementes 3.1, 3.1', 3.1'' erfolgt mittels chemischer Gasphasenabscheidung, physikalischer Gasphasenabscheidung, usw. Vorzugsweise haben die Signalelektrode 3.2, 3.2'. 3.2'' und die Masseelektrode 3.3, 3.3'. 3.3'' eine Dicke von kleiner/gleich 200 nm.

Vorzugsweise besteht die Signalelektrode 3.2, 3.2'. 3.2" aus einer ersten Signalelektrode 3.2, einer zweiten Signalelektrode 3.2' und einer dritten Signalelektrode 3.2". Und die Masseelektrode 3.3, 3.3'. 3.3'' besteht vorzugsweise aus einer ersten Masseelektrode 3.3, einer zweiten Masseelektrode 3.3' und einer dritten Masseelektrode 3.3''.

Die erste Signalelektrode 3.2 ist bereichsweise auf der radial inneren Seitenfläche des ersten Messelementes 3.1 angeordnet und greift von dieser radial inneren Seitenfläche elektrische Ladung ab. Die erste Signalelektrode 3.2 ist zudem bereichsweise auf der axial inneren Endfläche des ersten Messelementes 3.1 angeordnet. Die erste Masseelektrode 3.3 ist bereichsweise auf der radial äusseren Seitenfläche des ersten Messelement 3.1 angeordnet und greift von dieser radial äusseren Seitenfläche elektrische Ladung ab. Die erste Masseelektrode 3.3 ist zudem bereichsweise auf der axial äusseren Endfläche des ersten Messelementes 3.1 angeordnet.

Die zweite Signalelektrode 3.2' ist bereichsweise auf der radial inneren Seitenfläche des zweiten Messelementes 3.1' angeordnet und greift von dieser radial inneren Seitenfläche elektrische Ladung ab. Die zweite Signalelektrode 3.2' ist zudem bereichsweise auf der axial inneren Endfläche des zweiten Messelementes 3.1' angeordnet. Die zweite Masseelektrode 3.3' ist bereichsweise auf der radial äusseren Seitenfläche des zweiten Messelementes 3.1' angeordnet und greift von dieser radial äusseren Seitenfläche elektrische Ladung ab. Die zweite Masseelektrode 3.3' ist zudem bereichsweise auf der axial äusseren Endfläche des zweiten Messelementes 3.1' angeordnet.

Die dritte Signalelektrode 3.2'' ist bereichsweise auf der radial inneren Seitenfläche des dritten Messelementes 3.1'' angeordnet und greift von dieser radial inneren Seitenfläche elektrische Ladung ab. Die dritte Signalelektrode 3.2'' ist zudem bereichsweise auf der axial inneren Endfläche des dritten Messelementes 3.1'' angeordnet. Die dritte Masseelektrode 3.3" ist bereichsweise auf der radial äusseren Seitenfläche des dritten Messelementes 3.1'' angeordnet und greift von dieser radial äusseren Seitenfläche elektrische Ladung ab. Die dritte Masseelektrode 3.3" ist zudem bereichsweise auf der axial äusseren Endfläche des dritten Messelementes 3.1'' angeordnet.

Mit der von den Signalelektroden 3.2, 3.2'. 3.2'' abgegriffenen elektrischen Ladung wird ein Messignal S bereitgestellt. Mit der von den Masseelektroden 3.3, 3.3'. 3.3'' abgegriffenen elektrischen Ladung wird ein Massesignal MS bereitgestellt.

### Die ABLEITEINHEIT 4

Der piezoelektrische Hochdrucksensor 10 weist mindestens eine Ableiteinheit 4 auf. Die Ableiteinheit 4 hat die Funktion, die von der mindestens einen Signalelektrode 3.2, 3.2', 3.2'' abgegriffene elektrische Ladung als Messsignal S abzuleiten.

Die Ableiteinheit 4 besteht aus elektrisch leitfähigem Material wie hochlegierter Edelstahl. Die Ableiteinheit 4 weist einen zylinderförmigen Ladungskollektor 4.1 und einen stabförmigen Ladungsableiter 4.2 auf. Der Ladungskollektor 4.1 und der Ladungsableiter 4.2 können einteilig oder mehrteilig gefertigt sein. Falls sie mehrteilig gefertigt sind, können sie über eine beliebige mechanische Verbindung wie Stoffschluss, Formschluss, Kraftschluss, usw. elektrisch und mechanisch miteinander verbunden sein.

Die Ableiteinheit 4 erstreckt sich im Längsschnitt gemäss Fig. 1 entlang der Vertikalachse Z. Vorzugsweise erstreckt sich die Ableiteinheit 4 auf der Vertikalachse Z. Die Ableiteinheit 4 ist mit dem Ladungskollektor 4.1 der Membran 2 zugewandt und mit dem Ladungsableiter 4.2 ist sie von der Membran 2 abgewandt.

Der Ladungskollektor 4.1 ist im direkten flächigen Kontakt mit der mindestens einen Signalelektrode 3.2, 3.2', 3.2". Vorzugsweise besteht die Signalelektrode 3.2, 3.2'. 3.2'' aus der ersten Signalelektrode 3.2, der zweiten Signalelektrode 3.2' und der dritten Signalelektrode 3.2'' und der Ladungskollektor 4.1 ist im direkten flächigen Kontakt mit allen drei Signalelektroden 3.2, 3.2', 3.2". Der direkte flächige Kontakt ist derart gestaltet, dass die von den drei Signalelektroden 3.2, 3.2'. 3.2'' abgegriffene elektrische Ladung zum Ladungskollektor 4.1 fliesst. Der Ladungskollektor 4.1 sammelt somit die elektrische Ladung der drei Signalelektroden 3.2, 3.2'. 3.2'' zu einem Messsignal S. Der Ladungsableiter 4.2 leitet das Messignal S ab.

### DIE VORSPANNEINHEIT 5

Der piezoelektrische Hochdrucksensor 10 weist mindestens eine Vorspanneinheit 5 auf. Die Vorspanneinheit 5 hat die Funktion, die Messeinheit 3 gegen die Ableiteinheit 4 mechanisch vorzuspannen. Zudem hat die Vorspanneinheit 5 die Funktion, lokale Druckspitzen in der Membran 2 aufzuweiten und Unterschiede bei den Wärmeausdehnungskoeffizienten des Materials von Gehäuse 1 und Membran 2 sowie des piezoelektrischen Materials der Messeinheit 3 zu mildern. Schliesslich hat die Vorspanneinheit 5 die Funktion, die von der mindestens einen Masseelektrode 3.3, 3.3', 3.3'' abgegriffene elektrische Ladung als Massesignal MS abzuleiten.

Die Vorspanneinheit 5 besteht aus einem mechanisch beständigem Material. Vorzugsweise ist das Material der Vorspanneinheit 5 ein hochlegierter Edelstahl.

Die Vorspanneinheit 5 erstreckt sich im Längsschnitt gemäss Fig. 1 entlang der Vertikalachse Z. Vorzugsweise weist die Vorspanneinheit 5 ein trapezförmiges Kompensationselement 5.1, eine hohlzylinderförmige Vorspannhülse 5.2 und einen hohlzylinderförmigen Vorspannkörper 5.3 auf.

Der zu messende Druck P kann lokale Druckspitzen aufweisen, welche Druckspitzen deutlich grösser als der Druck P sind und welche Druckspitzen lokal begrenzt auf die Beaufschlagungsfläche A2 der Membran 2 treffen. Da die Membran 2 eine geringe Dicke aufweist und um zu vermeiden, dass die Druckspitzen ungehindert von der Membran 2 zur Messeinheit 3 gelangen und dort ein unerwünschtes Überschreiten der 0.2 %-Stauchgrenze der Messeinheit 3 verursachen, ist das Kompensationselement 5.1 entlang der Vertikalachse Z zwischen der Membran 2 und der Messeinheit 3 angeordnet. Das Kompensationselement 5.1 ist mit einem der Membran 2 zugewandten Ende im direkten flächigen Kontakt mit der Zentralfläche A2' der Membran 2. Druckspitzen gelangen somit in das Kompensationselement 5.1 und werden über die Länge des Kompensationselementes 5.1 zur Messeinheit 3 übertragen. Dabei weiten sich die Druckspitzen auf eine unschädliche Grösse auf.

Der piezoelektrische Hochdrucksensor 10 ist für den Einsatz bei einer Temperatur von bis zu 200 °C ausgelegt. Bei so hohen Temperaturen führen die Unterschiede beim Wärmeausdehnungskoeffizient des Materials von Gehäuse 1 und Membran 2 und dem Wärmeausdehnungskoeffizient des piezoelektrischen Materials der Messeinheit 3 zu einer thermischen Belastung, welche eine unerwünschte Beschädigung des piezoelektrischen Hochdrucksensors 10 zur Folge haben kann. Um diese thermische Belastung zu mildern, weist das Kompensationselement 5.1 einen Wärmeausdehnungskoeffizienten auf, welcher vom Betrag her geringer als der Wärmeausdehnungskoeffizient des Materials von Gehäuse 1 und Membran 2 und geringer als der Wärmeausdehnungskoeffizient des piezoelektrischen Materials der Messeinheit 3 ist.

Vorzugsweise ist das Kompensationselement 5.1 mit einem der Messeinheit 3 zugewandten Ende im direkten flächigen Kontakt mit der mindestens einen Masseelektrode 3.3, 3.3', 3.3". Vorzugsweise besteht die Masseelektrode 3.3, 3.3'. 3.3'' aus der ersten Masseelektrode 3.3, der zweiten Masseelektrode 3.3' und der dritten Masseelektrode 3.3'' und das Kompensationselement 5.1 ist im direkten flächigen Kontakt mit allen drei Masseelektroden 3.3, 3.3'. 3.3''. Der direkte flächige Kontakt ist derart gestaltet, dass die von den drei Masseelektroden 3.3, 3.3', 3.3'' abgegriffene elektrische Ladung zum Kompensationselement 5.1 fliesst. Das Kompensationselement 5.1 sammelt somit die elektrische Ladung der drei Masseelektroden 3.3, 3.3', 3.3'' zu einem Massesignal MS. Da das Kompensationselement 5.1 mit der Membran 2 elektrisch verbunden ist und die Membran 2 wiederum mit dem Mantel 1.1 elektrisch verbunden ist, wird das Massesignal MS dementsprechend abgeleitet.

Vorzugweise sind das Kompensationselement 5.1 und die Vorspannhülse 6.2 einteilig gefertigt. Sie können aber auch mehrteilig gefertigt sein und über einen Stoffschluss mechanisch miteinander verbunden sein.

Die Vorspannhülse 5.2 umschliesst die Messeinheit 3 radial beabstandet zur Vertikalachse Z. Entlang der Vertikalachse Z sind die Messeinheit 3 und der Ladungskollektor 4.1 der Ableiteinheit 4 zwischen dem Kompensationselement 5.1 und dem Vorspannkörper 5.3 angeordnet.

Mit einem dem Vorspannkörper 5.3 zugewandten Ende ist die Vorspannhülse 5.2 über eine stoffschlüssige Vorspannhülsenverbindung 5.4 mit dem Vorspannkörper 5.3 und mit dem ersten Mantelteil 1.3 verbunden. Vorzugsweise ist die stoffschlüssige Vorspannhülsenverbindung 5.4 eine ringförmige Schweissverbindung, welche sich über 360° über den gesamten Umfang des Endes der Vorspannhülse 5.2 erstreckt.

Die Realisierung der stoffschlüssige Vorspannhülsenverbindung 5.4 erfolgt unter einer Vorspannkraft entlang der Vertikalachse Z der Messeinheit 3 gegen den Ladungskollektor 4.1. Die Vorspannkraft schliesst mikroskopisch kleine Poren im piezoelektrischen Material der Messeinheit 3 sowie im Material des Ladungskollektors 4.1 mit dem Material der Signalelektrode 3.2, 3.2'. 3.2". Dadurch kann die elektrische Ladung nicht in den mikroskopisch kleinen Poren verweilen und eine Kapazität bilden. Ein solches Verweilen von elektrischer Ladung in mikroskopisch kleinen Poren würde die Messung des Druckes P verfälschen, zum einen, da dann nicht alle elektrische Ladung zum Zeitpunkt ihrer Erzeugung abgegriffen und abgeleitet wird, und zum anderen, da sich die Kapazität mit der Zeit entlädt und elektrische Ladung mehr oder weniger lange nach ihrer Erzeugung abgegriffen und abgeleitet wird.

### DAS ISOLATIONSELEMENT 6

Der piezoelektrische Hochdrucksensor 10 weist mindestens ein Isolationselement 6 auf. Das Isolationselement 6 hat die Funktion, die Ableiteinheit 4 gegenüber der Vorspanneinheit 5 elektrisch zu isolieren.

Das Isolationselement 6 besteht aus einem elektrisch isolierendem und mechanisch steifem Material wie Keramik, Al₂O₃-Keramik, Saphir, usw.

Das Isolationselement 6 ist hohlzylinderförmig. In radialer Richtung ist das Isolationselement 6 zwischen der Ableiteinheit 4 und der Vorspanneinheit 5 angeordnet.

Das Isolationselement 6 umschliesst die Ableiteinheit 4 radial. Das Isolationselement 6 auf einer von der Messeinheit 3 abgewandten Seite des Ladungskollektors 4.1 angeordnet. Das Isolationselement 6 ist im direkten flächigen Kontakt mit dem Ladungskollektor 4.1.

Das Isolationselement 6 ist von der Vorspanneinheit 6 radial umschlossen. Vorzugsweise ist das Isolationselement 6 im direkten flächigen Kontakt mit dem Vorspannkörper 5.3 und mit der Vorspannhülse 5.2.

### Bezugszeichenliste

- 0: Messort
- 1: Gehäuse
- 1.1: Mantel
- 1.2: Hohlraum
- 1.3: erster Mantelteil
- 1.4: zweiter Mantelteil
- 1.5: Montagemittel
- 1.6: stoffschlüssige Mantelverbindung
- 2: Membran
- 2.1: Zentralbereich
- 2.2: Randbereich
- 2.3: Dichtfläche
- 2.4: stoffschlüssige Membranverbindung
- 3: Messeinheit
- 3.1, 3.1', 3.1'': Messelement
- 3.2, 3.2', 3.2'': Signalelektrode
- 3.3, 3.3', 3.3'': Masseelektrode
- 4: Ableiteinheit
- 4.1: Ladungskollektor
- 4.2: Ladungsableiter
- 5: Vorspanneinheit
- 5.1: Kompensationselement
- 5.2: Vorspannhülse
- 5.3: Vorspannkörper
- 5.4: stoffschlüssige Vorspannhülsenverbindung
- 6: Isolationselement
- 10: piezoelektrischer Hochdrucksensor
- A - A: Schnittverlauf
- A1: Endfläche des ersten Mantelteils
- A2: Beaufschlagungsfläche der Membran
- A2': Zentralfläche der Membran
- A2'': Randfläche der Membran
- A3: Querschnittsfläche des Messelementes
- D1: Aussendurchmesser des Gehäuses
- D2: Aussendurchmesser der Membran
- D3: Durchmesser der Beaufschlagungsfläche der Membran
- L3: Länge des Messelementes
- MS: Massesignal
- P: Druck
- S: Messsignal
- T2: Dicke des Zentralbereiches
- T2': Dicke des Randbereiches
- X: Horizontalachse
- XY: Horizontalebene
- Y: Längsachse
- Z: Vertikalachse

## Patentansprüche

1. Piezoelektrischer Hochdrucksensor (10) zur Messung eines Druckes (P) von bis zu 10 kbar; mit einem Gehäuse (1), einer Membran (2) und einer Messeinheit (3); welches Gehäuse (1) hohlzylinderförmig ist und einen Mantel (1.1) und einen Hohlraum (1.2) aufweist, in welchem Mantel (1.1) mindestens ein Montagemittel (1.5) eingeformt ist, welcher piezoelektrische Hochdrucksensor (10) über das Montagemittel (1.5) an einem Messort (0) montierbar ist; welche Messeinheit (3) im Hohlraum (1.2) angeordnet ist und mindestens ein Messelement (3.1, 3.1', 3.1'') aus piezoelektrischem Material aufweist; welche Membran (2) scheibenförmig ist, mit einem Zentralbereich (2.1) und einem Randbereich (2.2), welche Membran (2) eingerichtet ist, den zu messenden Druck (P) über den Zentralbereich (2.1) aufzunehmen und entlang einer Vertikalachse (Z) in die Messeinheit (3) zu übertragen, und welche Membran (2) über den Randbereich (2.2) mit dem Mantel (1.1) stoffschlüssig verbunden ist; **dadurch gekennzeichnet, dass** das Messelement (3.1, 3.1', 3.1'') stabförmig ist und gemäss dem piezoelektrischen Transversaleffekt arbeitet; dass das Messelement (3.1, 3.1', 3.1'') eine Länge (L3) entlang der Vertikalachse (Z) und eine Querschnittsfläche (A3) normal zur Vertikalachse (Z) aufweist; dass ein Verhältnis von Länge (L3) zu Querschnittsfläche (A3) in einem Bereich von grösser/gleich 1.0 mm⁻¹ bis kleiner/gleich 1.5 mm⁻¹ liegt; und dass der Mantel (1.1) einen Durchmesser (D1) von kleiner/gleich 10 mm aufweist.

2. Piezoelektrischer Hochdrucksensor (10) gemäss Anspruch 1, **dadurch gekennzeichnet, dass** das Messelement (3.1, 3.1', 3.1'') eine Länge (L3) kleiner/gleich 3.0 mm, vorzugsweise kleiner/gleich 2.4 mm aufweist.

3. Piezoelektrischer Hochdrucksensor (10) gemäss einem der Ansprüche 1 oder 2, **dadurch gekennzeichnet, dass** das Messelement (3.1, 3.1', 3.1") eine Querschnittsfläche (A3) im Bereich grösser/gleich 1.5 mm² und kleiner/gleich 2.5 mm² aufweist; und dass die gesamte Querschnittsfläche (A3) der drei Messelemente (3.1, 3.1', 3.1") im Bereich von grösser/gleich 4.5 mm² und kleiner/gleich 7.5 mm² liegt.

4. Piezoelektrischer Hochdrucksensor (10) gemäss einem der Ansprüche 1 bis 3, **dadurch gekennzeichnet, dass** die Messeinheit (3) genau drei Messelemente (3.1, 3.1', 3.1'') aufweist.

5. Piezoelektrischer Hochdrucksensor (10) gemäss einem der Ansprüche 1 bis 4, **dadurch gekennzeichnet, dass** das piezoelektrische Material des Messelementes (3.1, 3.1', 3.1'') ein Einkristall aus SiO₂ oder GaPO₄ ist; und dass das piezoelektrische Material aus SiO₂ entlang der Vertikalachse (Z) einen Elastizitätskoeffizienten von 87 kN/mm² aufweist oder dass das piezoelektrische Material aus GaPO₄ entlang der Vertikalachse (Z) einen Elastizitätskoeffizienten von 67 kN/mm² aufweist.

6. Piezoelektrischer Hochdrucksensor (10) gemäss Anspruch 5, **dadurch gekennzeichnet, dass** der Mantel (1.1) aus einem mechanisch beständigem Material mit einem Elastizitätsmodul von grösser 200 kN/mm² ist; dass der Elastizitätskoeffizient des piezoelektrischen Materials aus SiO₂ um mehr als einen Faktor 2 kleiner als derjenige des Materials des Mantels (1.1) ist oder dass der Elastizitätskoeffizient des piezoelektrischen Materials aus GaPO₄ um einen Faktor 3 kleiner als derjenige des Materials des Mantels (1.1) ist; und dass sich das piezoelektrische Material des Messelementes (3.1, 3.1', 3.1'') unter der Wirkung des Druckes (P) gemäss diesem Faktor stärker entlang der Vertikalachse (Z) gestaucht als das Material des Mantels (1.1).

7. Piezoelektrischer Hochdrucksensor (10) gemäss Anspruch 6, **dadurch gekennzeichnet, dass** die Membran (2) über den Zentralbereich (2.1) mit dem Messelement (3.1, 3.1', 3.1'') im indirekten flächigen Kontakt ist; dass die Stauchung des piezoelektrischen Materials des Messelementes (3.1, 3.1', 3.1'') Zug- und Druckspannungen im Zentralbereich (2.1) bewirkt; dass der Zentralbereich (2.1) eine Dicke (T2) von kleiner/gleich 0.5 mm aufweist; und dass die Zug- und Druckspannungen für eine Länge (L3) des Messelementes (3.1, 3.1'. 3.1'') von kleiner/gleich 3.0 mm, vorzugsweise kleiner/gleich 2.4 mm bei einem Druck (P) von bis zu 10 kbar auf einem für die mechanische Stabilität des Zentralbereiches (2.1) unschädlichem Niveau sind.

8. Piezoelektrischer Hochdrucksensor (10) gemäss einem der Ansprüche 1 bis 7, **dadurch gekennzeichnet, dass** der piezoelektrische Hochdrucksensor (10) über das Montagemittel (1.5) in einer am Messort (0) angeordneten Montagemittel (1.5) passend gefertigten Montagebohrung montierbar ist; dass das Montagemittel (1.5) und die Montagebohrung eine M10-Schraubverbindung bilden; dass im montierten Zustand die M10-Schraubverbindung ein Anzugsdrehmoment von nicht mehr als 20 Nm aufweist und den piezoelektrischen Hochdrucksensor (10) mit einer Niederhaltekraft von kleiner/gleich 20 kN in der Montagebohrung hält.

9. Piezoelektrischer Hochdrucksensor (10) gemäss Anspruch 8, **dadurch gekennzeichnet, dass** die Membran (2) eine Beaufschlagungsfläche (A2) aufweist, welche Beaufschlagungsfläche (A2) sich senkrecht zur Vertikalachse (Z) erstreckt; dass die Beaufschlagungsfläche (A2) auf einer vom Hohlraum (1.2) abgewandten Seite der Membran (2) angeordnet ist und der zu messende Druck (P) mit einer Beaufschlagungskraft direkt auf die Beaufschlagungsfläche (A2) wirkt; und dass die Beaufschlagungsfläche (A2) so gross bemessen ist, dass eine Kombination der Niederhaltekraft mit der Beaufschlagungskraft in den Materialien des piezoelektrischen Hochdrucksensors (10) nicht zu schädlichen Spannungsspitzen mit plastischer Verformung oder Bruch führt.

10. Piezoelektrischer Hochdrucksensor (10) gemäss Anspruch 9, **dadurch gekennzeichnet, dass** für einen Druck (P) von 10 kbar die Grösse der Beaufschlagungsfläche (A2) kleiner/gleich 20 mm² ist.

11. Piezoelektrischer Hochdrucksensor (10) gemäss einem der Ansprüche 1 bis 10, **dadurch gekennzeichnet, dass** das piezoelektrische Material des Messelementes (3.1, 3.1', 3.1'') ein Einkristall ist und einen piezoelektrischen Koeffizienten d₁₂ für den piezoelektrischen Transversaleffekt aufweist; und dass die Empfindlichkeit des piezoelektrischen Hochdrucksensors (10) proportional zum Produkt des piezoelektrischen Koeffizienten d₁₂ des piezoelektrischen Materials des Messelementes (3.1, 3.1', 3.1'') mit dem Verhältnis von Länge (L3) zu Querschnittsfläche (A3) des Messelementes (3.1, 3.1', 3.1") ist.

12. Piezoelektrischer Hochdrucksensor (10) gemäss Anspruch 11, **dadurch gekennzeichnet, dass** für SiO₂ als piezoelektrisches Material des Messelementes (3.1, 3.1', 3.1'') der piezoelektrische Koeffizient d₁₂ = 2.3 pC/N ist oder dass für GaPO₄ als piezoelektrisches Material des Messelementes (3.1, 3.1', 3.1'') der piezoelektrische Koeffizient d₁₂ = 4.5 pC/N ist; und dass für das Verhältnis von Länge (L3) zu Querschnittsfläche (A3) des Messelementes (3.1, 3.1', 3.1'') im Bereich von grösser/gleich 1.0 mm⁻¹ und kleiner/gleich 1.5 mm⁻¹ die Empfindlichkeit des piezoelektrischen Hochdrucksensors (10) grösser/gleich 1.0 pC/bar ist.
